(19) Europäisches Patentamt
European Patent Office
Office européen des brevets

(11) Veröffentlichungsnummer: **0 667 365 A2**

# (12) EUROPÄISCHE PATENTANMELDUNG

(21) Anmeldenummer: **95100755.8**

(51) Int. Cl.6: **C08G 63/695**, C08G 77/445

(22) Anmeldetag: **20.01.95**

(30) Priorität: **11.02.94 DE 4404364**

(43) Veröffentlichungstag der Anmeldung:
**16.08.95 Patentblatt 95/33**

(84) Benannte Vertragsstaaten:
**AT BE CH DE FR GB IT LI NL SE**

(71) Anmelder: **CASSELLA Aktiengesellschaft**
**Hanauer Landstrasse 526**
**D-60386 Frankturt (DE)**

(72) Erfinder: **Engelhardt, Fritz, Dr.**
**Hünfelderstrasse 20**
**D-60386 Frankturt am Main (DE)**
Erfinder: **Kühlwein, Jürgen, Dr.**
**Konrad-Adenauer-Strasse 36 a**
**D-63150 Heusenstamm (DE)**
Erfinder: **Schuler, Wilfried**
**Fahnenstrasse 24**
**D-65551 Limburg (DE)**
Erfinder: **Zerrer, Ralf, Dr.**
**Taunusring 72**
**D-63755 Alzenau (DE)**
Erfinder: **Antwerpen, Werner**
**Julius-Brecht-Strasse 16**
**D-65824 Schwalbach/Ts. (DE)**

(74) Vertreter: **Muley, Ralf, Dr.**
**Cassella AG,**
**Patentabteilung,**
**Hanauer Landstrasse 526**
**D-60386 Frankturt (DE)**

## (54) Polysiloxangruppenhaltige Polykondensate.

(57) Die vorliegende Erfindung betrifft Polykondensate der allgemeinen Formel I

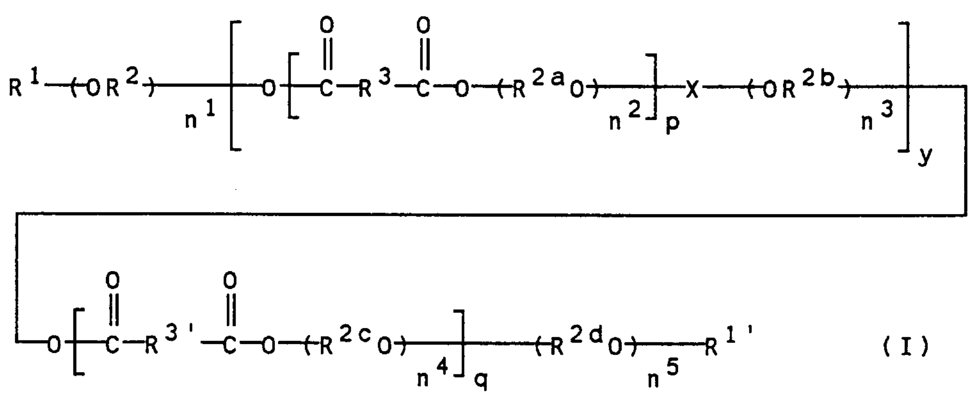

(I)

worin

EP 0 667 365 A2

X

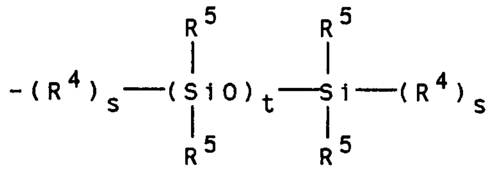

bedeutet;
und die übrigen Variablen wie in Anspruch 1 angegeben definiert sind, Verfahren zu ihrer Herstellung und ihre Verwendung.

Die vorliegende Erfindung betrifft polysiloxangruppenhaltige Polykondensate, Verfahren zu ihrer Herstellung und ihre Verwendung.

Es ist seit langem bekannt, daß hydrophile Block-Copolyester sowohl als Soil-Release-Agentien, als auch als Antistatika auf dem Gebiet der Textilausrüstung eingesetzt werden können.

In jüngerer Zeit werden bestimmte Polykondensationsprodukte verstärkt als Soil-Release-Komponenten in Waschmittelformulierungen eingesetzt. Die hierfür notwendige Hydrophilie wird dadurch erreicht, daß 0 bis 30 Mol-% Dicarbonsäuren oder Diol-Komponenten Sulfogruppen bzw. Salze davon tragen. Außerdem läßt sich die Hydrophilie durch Verwendung langkettiger Poly(oxyalkylen)oxy-Einheiten erhöhen.

Die Kettenlänge bzw. das Molekulargewicht solcher Produkte kann durch eine entsprechende Reaktionsführung oder auch durch Verwendung von monofunktionalen Komponenten, die als Kettenverschluß ("sogenannte endcaps") fungieren, eingestellt werden. Solche "endcaps" können anionisch oder nichtionisch und beispielsweise Carbonsäuren oder Alkohole sein (siehe beispielsweise US 4 721 580, US 4 702 857, US 4 711 730 und US 4 713 194).

Die vorliegende Erfindung betrifft Polykondensate der allgemeinen Formel I

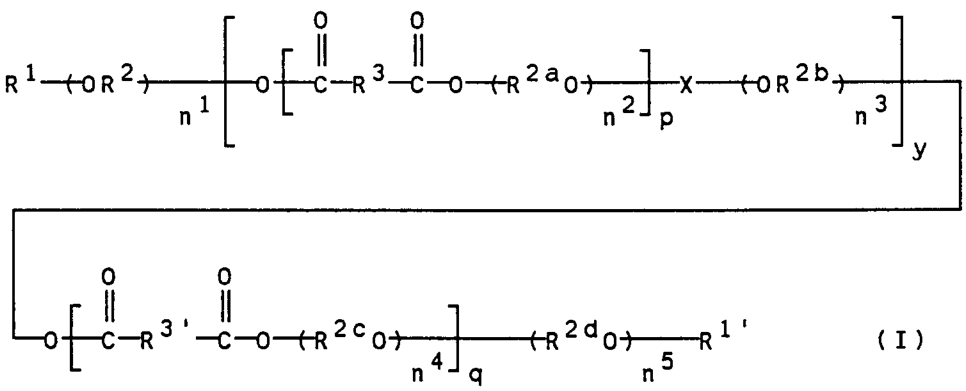

(I)

worin
X

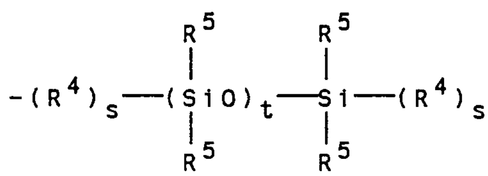

bedeutet;
$R^1$ und $R^{1'}$ unabhängig voneinander Wasserstoff, ($C_1$-$C_{22}$)-Alkyl, ($C_2$-$C_{22}$)-Alkenyl, ($C_3$-$C_8$)-Cycloalkyl, ($C_6$-$C_{14}$)-Aryl, ($C_6$-$C_{14}$)-Aryl-($C_1$-$C_8$)-Alkyl, $MO_3S$-$R^6$-, $MO_3S$-,

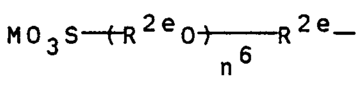

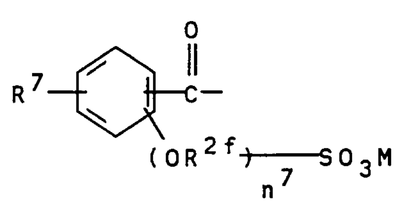

oder

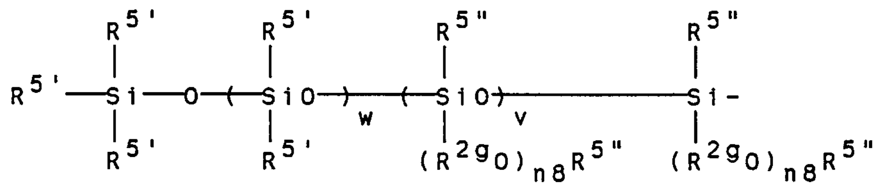

bedeuten;
$R^2$ bis $R^{2g}$ unabhängig voneinander ($C_1$-$C_{30}$)-Alkylen, ($C_3$-$C_8$)-Cycloalkylen und/oder ($C_2$-$C_{30}$)-Alkenylen, die durch einen Rest $R^1$ substituiert sein können, bedeuten;
$R^3$ und $R^{3'}$ unabhängig voneinander ($C_1$-$C_{22}$)-Alkylen, ($C_3$-$C_8$)-Cycloalkylen, ($C_2$-$C_{22}$)-Alkenylen und/oder ($C_6$-$C_{14}$)-Arylen bedeuten, wobei 0 bis 30 % aller Reste $R^3$ und $R^{3'}$ einen -$SO_3M$-Substituenten tragen;
$R^4$ ($C_1$-$C_{30}$)-Alkylen, ($C_3$-$C_8$)-Cycloalkylen oder ($C_2$-$C_{30}$)-Alkenylen bedeutet;
$R^5$, $R^{5'}$ und $R^{5''}$ unabhängig voneinander Wasserstoff, ($C_1$-$C_{30}$)-Alkyl, ($C_3$-$C_8$)-Cycloalkyl oder ($C_2$-$C_{30}$)-Alkenyl bedeuten;
$R^6$ wie $R^3$, aber unabhängig von diesem, definiert ist;
$R^7$ ($C_1$-$C_{22}$)-Alkyl, ($C_3$-$C_8$)-Cycloalkyl oder ($C_2$-$C_{22}$)-Alkenyl bedeutet, wobei 0 bis 30 % aller Reste $R^7$ einen -$SO_3M$-Substituenten tragen;
M Wasserstoff, ein Alkalimetall, die Ammoniumgruppe oder eine substituierte Ammoniumgruppe bedeutet;
$n^1$ bis $n^7$ unabhängig voneinander eine ganze Zahl von 0 bis 40 bedeuten;
p und q unabhängig voneinander eine ganze Zahl von 2 bis 20 bedeuten;
s 0 oder 1 bedeutet;
t eine ganze Zahl von 0 bis 80 bedeutet;
w eine ganze Zahl von 0 bis 80 bedeutet; und
v eine ganze Zahl von 0 bis 80 bedeutet und
y eine ganze Zahl von 1 bis 20 bedeutet.

Alkylgruppen können geradkettig oder verzweigt sein und sind beispielsweise Methyl, Ethyl, n-Propyl, i-Propyl, n-Butyl, i-Butyl, sek.Butyl, tert.Butyl, n-Pentyl, 3-Methylbutyl, Pentyl-3, n-Hexyl, 2-Ethylbutyl, n-Heptyl, i-Heptyl, Octyl-2, 2-Ethylhexyl, i-Nonyl, n-Decyl, i-Decyl, n-Dodecyl, n-Hexadecyl oder n-Octadecyl. Bevorzugt sind ($C_1$-$C_5$)-Alkyl und besonders bevorzugt ($C_1$-$C_3$)-Alkyl.

Alkylengruppen können ebenfalls geradkettig oder verzweigt sein. Beispiele sind Ethylen, n-Propylen, i-Propylen, n-Butylen, i-Butylen, sek.-Butylen, tert.Butylen, n-Pentylen, 3-Methylbutylen, n-Hexylen, 2-Ethylbutylen, n-Heptylen, i-Heptylen, Octylen, 2-Ethylhexylen, i-Nonylen, n-Decylen, i-Decylen, n-Dodecylen, n-Hexadecylen und n-Octadecylen.

Für $R^2$ bis $R^3$ stehende Alkylengruppen haben bevorzugt 2 bis 5 Kohlenstoffatome und bedeuten besonders bevorzugt Ethylen, n-Propylen oder i-Propylen.

Für $R^3$, $R^{3'}$ und $R^4$ stehende Alkylengruppen haben bevorzugt 1 bis 5 Kohlenstoffatome.

Cycloalkylreste sind insbesondere Cyclopropyl, Cyclobutyl, Cyclopentyl, Cyclohexyl, Cycloheptyl und Cyclooctyl, wobei Cyclopentyl und Cyclohexyl bevorzugt sind. Unter Cycloalkyl wird aber auch beispielsweise Dimethylcycloalkyl verstanden. Analoges gilt für Cycloalkylengruppen.

Auch Alkenylgruppen können geradkettig oder verzweigt sein und entsprechen beispielsweise den oben genannten Alkylgruppen. Bevorzugte Alkenylgruppen haben 2 bis 5 Kohlenstoffatome, wobei Vinyl und Allyl besonders bevorzugt sind.

Alkenylengruppen können ebenfalls geradkettig oder verzweigt sein und entsprechend beispielsweise den oben genannten Alkylengruppen. Bevorzugte Alkenylgruppen haben 2 bis 5 Kohlenstoffatome, wobei Vinylen und Propenylen besonders bevorzugt sind.

Arylgruppen sind bevorzugt Phenyl, Naphthyl, Biphenylyl oder Fluorenyl, wobei Phenyl besonders bevorzugt ist.

Analoges gilt für Arylengruppen, wobei 1,2-Phenylen, 1,3-Phenylen und 1,4-Phenylen besonders bevorzugt sind.

Bevorzugte Arylalkylgruppen sind Benzyl und Phenethyl.

Ein für M stehendes Alkalimetall ist bevorzugt Natrium oder Kalium. Als für M stehende substituierte Ammoniumgruppen können alle üblichen mono-, di-, tri- oder tetrasubstituierten Ammoniumgruppen eingesetzt werden. Geeignete Substituenten sind dabei insbesondere Alkylgruppen und gegebenenfalls substituiertes Phenyl. Bevorzugt ist Tetra-($C_1$-$C_4$)-alkylammonium.

$R^6$ bedeutet bevorzugt ($C_1$-$C_4$)-Alkylen oder ($C_2$-$C_4$)-Alkenylen.
$R^7$ bedeutet bevorzugt ($C_1$-$C_4$)-Alkyl.

Jeder einzelne der Reste $R^2$ bis $R^{2g}$ kann, vorausgesetzt n >1, auch innerhalb eines erfindungsgemäßen Polykondensats verschiedene Bedeutungen haben. Innerhalb einer polymeren Teilstruktur, z.B. $-(R^{2a}O)-_{n2}-$ können diese verschiedenen Bedeutungen nach statistischen Regeln oder blockweise aufeinanderfolgen. Analoges gilt für $R^3$ und $R^{3'}$, sowie für $n^2$, $n^3$ und $n^4$.

In bevorzugten Polykondensaten der allgemeinen Formel I bedeuten
$R^1$ und $R^{1'}$ unabhängig voneinander Methyl oder Ethyl,
$R^2$ bis $R^{2g}$ unabhängig voneinander Ethylen, n-Propylen oder i-Propylen,
$R^3$ und $R^{3'}$ unabhängig voneinander $(C_1-C_4)$-Alkylen, Phenylen oder Naphthylen,
$R^4$ $(C_2-C_4)$-Alkylen,
$R^5$, $R^{5'}$ und $R^{5''}$ unabhängig voneinander Wasserstoff oder $(C_1-C_5)$-Alkyl,
M Wasserstoff, Natrium oder Kalium
$n^1$ bis $n^8$ unabhängig voneinander eine ganze Zahl von 2 bis 35,
p und q unabhängig voneinander eine ganze Zahl von 2 bis 20,
t eine ganze Zahl von 0 bis 40,
w eine ganze Zahl von 1 bis 30,
v eine ganze Zahl von 0 bis 4 und
y eine ganze Zahl von 1 bis 5.

Bevorzugte Polykondensate der allgemeinen Formel I sind darüberhinaus solche, die Molekulargewichte von 2000 bis 20000 aufweisen.

In besonders bevorzugten Polykondensaten der allgemeinen Formel I sind alle Werte $n^1$ bis $n^8$ identisch oder stehen nur für 2 oder 3 verschiedene ganze Zahlen.

Darüber hinaus ist es besonders bevorzugt, wenn alle Reste $R^2$ bis $R^{2g}$ identisch sind oder nur 2 oder 3 verschiedene Bedeutungen haben.

Weiterhin bedeutet die Summe p + q besonders bevorzugt eine ganze Zahl von 5 bis 15.

Die erfindungsgemäßen Polykondensate der allgemeinen Formel I können dadurch hergestellt werden, daß

a) eine Verbindung der allgemeinen Formel IIa

$R^8OOC-R^3-COOR^8$ (IIa)

worin $R^3$ wie oben angegeben definiert ist und $R^8$ Wasserstoff, $(C_1-C_4)$-Alkyl, Halogen, wie insbesondere Chlor, oder $R^8OOC-R^3-CO-$ bedeutet, und eine Verbindung der allgemeinen Formel IIb

$R^9OOC-R^{3'}-COOR^9$ (IIb)

worin $R^{3'}$ wie oben angegeben definiert ist und $R^9$ Wasserstoff, $(C_1-C_4)$-Alkyl, Halogen, wie insbesondere Chlor, oder $R^8OOC-R^{3'}-CO-$ bedeutet, und

b) eine Verbindung der allgemeinen Formel IIIa

$$H-(-OR^2-)_{n^1}-OH \quad (IIIa)$$

und/oder eine Verbindung der allgemeinen Formel IIIb

$$H-(-OR^{2a}-)_{n^2}-OH \quad (IIIb)$$

und/oder eine Verbindung der allgemeinen Formel IIIc

$$H-(-OR^{2b}-)_{n^3}-OH \quad (IIIc)$$

und/oder eine Verbindung der allgemeinen Formel IIId

$$H\!-\!(\!-OR^{2c}-\!)_{n^4}\!-OH \qquad (IIId)$$

und/oder eine Verbindung der allgemeinen Formel IIIe

$$H\!-\!(\!-OR^{2d}-\!)_{n^5}\!-OH \qquad (IIIe)$$

worin $R^2$ bis $R^{2d}$ und $n^1$ bis $n^5$ wie oben angegeben definiert sind, und
c) eine Verbindung der allgemeinen Formel IVa

$R^1$-OH (IVa)

worin $R^1$ wie oben angegeben definiert ist, und eine Verbindung der allgemeinen Formel IVb

$R^{1'}$-OH (IVb)

worin $R^{1'}$ wie oben angegeben definiert ist, und
d) eine Verbindung der allgemeinen Formel V

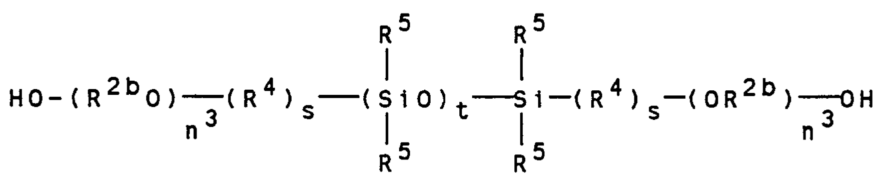

(V)

worin $R^{2b}$, $R^4$, $R^5$, $n^3$, s und t wie oben angegebenen definiert sind, miteinander umsetzt.

Verbindungen der allgemeinen Formeln IIa bzw. IIb sind beispielsweise Malonsäure, Bernsteinsäure, Glutarsäure, Adipinsäure, Korksäure, Maleinsäure, Fumarsäure, Itakonsäure, Cyclohexandicarbonsäure-1,4, Cyclohexandicarbonsäure-1,3, Phthalsäure, Isophthalsäure, Terephthalsäure, 1,4- und 1,5-Naphthalindicarbonsäure, Diphensäure, Norbornandicarbonsäure sowie deren Methyl-, Ethyl-, Propyl- und Butylester, Anhydride und Chloride, desweiteren Natrium-, Kalium- und Ammoniumsulfonatobernsteinsäure, 4-Natrium- und Kalium-sulfonatophthalsäure, 2-Natrium-sulfonatoterephthalsäure, 5-Natrium-sulfonatoisophthalsäure, Natrium-sulfonatobernsteinsäure sowie deren Methyl-, Ethyl-, Propyl- und Butylester, Anhydride und Chloride.

Verbindungen der allgemeinen Formeln IIIa bis IIIe sind beispielsweise Ethylenglykol, Propandiol-1,2 und -1,3, Ethylenglykol-mono-(3-hydroxypropyl)ether, Ethylenglykolmono-(3-hydroxy-propyl-2)ether, Ethylenglykol-mono-(2-hydroxy-propyl)ether, Butandiole, insbesondere Butandiol-1,4, Pentandiole, wie Pentandiol-1,5, Hexandiole, insbesondere Hexandiol-1,6, Decandiol-1,10, Diethylenglykol, Dipropylenglykol, Bis(3-hydroxypropyl)-ether, Triethylenglykol, Tetraethylenglykol, Tripropylenglykol, 4,8-Dioxadecan-1,10-diol, Polyethylenglykole vom Molekulargewicht 300 bis 2000, Polypropylenglykole vom Molekulargewicht 300 bis 2000, Polyether des Propandiols-1,3 und gemischte Polyether des Ethylenglykols mit Propylenglykol und/oder gegebenenfalls Propandiol-1,3, wobei die genannten Polyether Molekulargewichte von 300 bis 2000 besitzen, Bis(4-hydroxybutyl)ether, 2-Methylenpropandiol-1,3, 2,4-Dimethyl-2-ethylhexandiol-1,3, 2-Ethyl-2-butylpropandiol-1,3, 2,2-Dimethylpropandiol-1,3, 2-Ethyl-2-isobutylpropandiol-1,3, 2,2,4-Trimethylhexandiol-1,6, 1,3-Dihydroxy-cyclohexan sowie 1,4-Dihydroxy-cyclohexan (Chinit).

Verbindungen der allgemeinen Formeln IVa bzw. IVb sind beispielsweise Methanol, Ethanol, n-Propanol, i-Propanol, n-Butanol, Cyclohexanol, Cyclopentanol, Benzylalkohol, Phenol, Allylalkohol, Sulfonsäure, Benzoesäuren der Formel VI

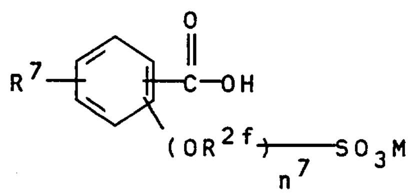

(VI)

worin $R^{2f}$, $R^7$, M und $n^7$ wie oben angegeben definiert sind, Verbindungen der Formel

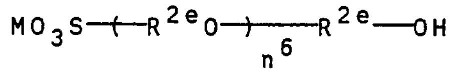

worin $R^{2e}$, M und $n^6$ wie oben angegeben definiert sind, sowie Polysiloxane der Formel VII

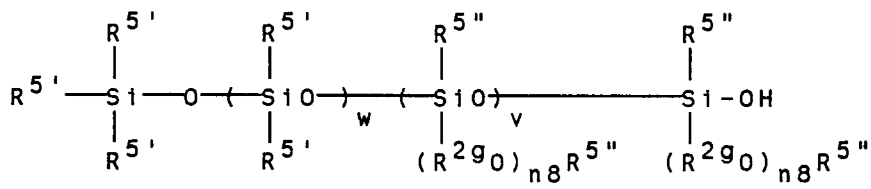

(VII)

worin $R^{5'}$, $R^{5''}$, $R^{2g}$, $n^8$, v und w wie oben angegeben definiert sind.

Die Benzoesäuren der Formel VI können auch in Form ihrer $(C_1\text{-}C_4)$-Alkylester oder ihrer Halogenide, insbesondere Chloride, eingesetzt werden.

In einer bevorzugten Ausführungsform des erfindungsgemäßen Herstellungsverfahrens werden

a) die Verbindungen der Formeln IIa und IIb in Mengen von zusammen 100 Mol-%,

b) die Verbindungen der Formeln IIIa bis IIIe in Mengen von zusammen 150 bis 250 Mol-%,

c) die Verbindungen der Formeln IVa und IVb in Mengen von zusammen 20 bis40 Mol-% und

d) die Verbindungen der Formel V in Mengen von 10 bis 50 Mol-%

eingesetzt.

Die Umsetzung kann durch eine gezielte Reaktionsführung gesteuert und somit Struktur und Molgewicht des hergestellten Produkts beeinflußt werden. Geeignete Parameter sind Temperatur, Druck oder auch Menge und Reihenfolge der Zugabe der Ausgangsvebindungen gemäß a) bis d).

Üblicheweise wird die Umsetzung in eine Veresterungsreaktion (falls $R^8$ bzw. $R^9$ Wasserstoff bedeuten) oder Umesterungsreaktion (falls $R^8$ bzw. $R^9$ eine andere Bedeutung als Wasserstoff haben) und eine Kondensationsreaktion unterteilt. Die Ver(Um)esterungsreaktion wird dabei normalerweise bei Normaldruck und die Kondensationsreaktion bei einem Druck von 1013 bis 5 mbar ausgeführt. Es ist bevorzugt, die Ver(Um)esterungsreaktion in Gegenwart eines Veresterungs- bzw. Umesterungskatalysators auszuführen. Geeignete Katalysatoren dieser Art sind beispielsweise Titanalkoholate, insbesondere Titantetraisopropylat, Manganacetat und Zinkacetat.

Das erfindungsgemäße Verfahren wird normalerweise bei Temperaturen von 100 bis 300 °C, besonders bevorzugt bei 150 bis 250 °C, durchgeführt. Die Reaktionszeiten betragen dabei 1 bis 10 Stunden, bevorzugt 2 bis 5 Stunden.

Soweit während der Umsetzung flüchtige Produkte entstehen, werden diese nach oder bevorzugt kontinuierlich während der Reaktion abdestilliert.

Die Verbindungen der Formeln IIa, IIb, IIIa bis IIIe, IVa, IVb, V, VI und VII sind bekannt, können käuflich erworben werden oder sind nach bekannten Herstellungsverfahren zugänglich.

Die erfindungsgemäßen Polykondensate können in Wasser gelöst bzw. dispergiert werden, wobei klare bis opaleszierende, viskose Lösungen resultieren. Aufgrund ihres Soil-Release-Effekts können sie zur Textilausrüstung von Polyestergeweben verwendet werden.

Unter Polyestermaterialien werden dabei insbesondere Fäden, Garne oder textile Flächengebilde aus Polyester verstanden.

Deren Behandlung mit den erfindungsgemäßen Polykondensaten erfolgt beispielsweise derart, daß letztere vorzugsweise in Form von Dispersionen in an sich bekannter Weise aufgebracht und nach dem

üblichen Trocknen durch eine Hitzebehandlung fixiert werden. Der Auftrag geschieht beispielsweise nach dem Ausziehverfahren mittels einer Foulardapplikation oder durch Sprühen.

Die erfindungsgemäßen Polykondensate werden dabei bevorzugt in Mengen von 0,3 bis 1,5 Gew.%, besonders bevorzugt 0,6 bis 1,2 Gew.%, bezogen auf das Substratgewicht, aufgebracht.

Dementsprechend werden Dispersionen der erfindungsgemäßen Polykondensate, die in der Regel einen Polykondensatgehalt von 5 bis 45 Gew.%, bevorzugt 10 bis 35 Gew.%, aufweisen, bevorzugt in einer Menge von 0,9 bis 30 Gew.%, besonders bevorzugt 2,4 bis 12 Gew.%, bezogen auf das Substratgewicht, aufgebracht.

Mechanisch aufgetragener Schmutz, wie Öle und Fette, kann von Materialien, die mit den erfindungsgemäßen Polykondensaten behandelt wurden, wesentlich leichter entfernt werden (Soil-Release-Effekt).

Ein wesentlicher Vorteil der erfindungsgemäßen Polykondensate im Vergleich zu den Produkten des Standes der Technik besteht darin, daß durch den Einbau der Polysiloxaneinheiten, den mit den erfindungsgemäßen Polykondensaten ausgerüsteten Textilien besonders vorteilhafte Griffeigenschaften verliehen werden.

**BEISPIELE**

Die folgende Tabelle 1 nennt Verbindungen der Formel V, die in den folgenden Beispielen eingesetzt werden können:

Tabelle 1

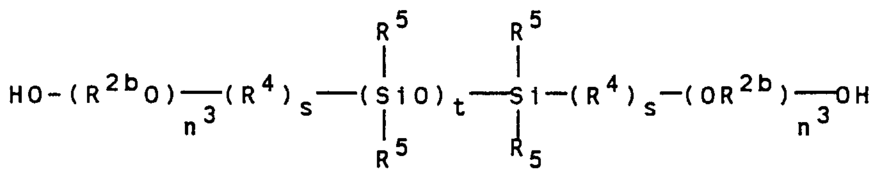

| Nr. | $R^4$ | $R^5$ | $R^{2b}$ | s | t | $n^3$ |
|---|---|---|---|---|---|---|
| Si1 | $(CH_2)_2$ | $CH_3$ | - | 1 | 10 | 0 |
| Si2 | $(CH_2)_3$ | $CH_3$ | - | 1 | 10 | 0 |
| Si3 | $(CH_2)_4$ | $CH_3$ | - | 1 | 10 | 0 |
| Si4 | $(CH_2)_2$ | $CH_3$ | $(CH_2)_2$ | 1 | 10 | 6 |
| Si5 | $(CH_2)_3$ | $CH_3$ | $(CH_2)_2$ | 1 | 10 | 6 |
| Si6 | $(CH_2)_4$ | $CH_3$ | $(CH_2)_2$ | 1 | 10 | 6 |
| Si7 | $(CH_2)_2$ | $CH_3$ | $(CH_2)_3$ | 1 | 10 | 10 |
| Si8 | $(CH_2)_3$ | $CH_3$ | $(CH_2)_3$ | 1 | 10 | 10 |
| Si9 | $(CH_2)_4$ | $CH_3$ | $(CH_2)_3$ | 1 | 10 | 10 |
| Si10 | $(CH_2)_2$ | $CH_3$ | $(CH_2)_4$ | 1 | 15 | 10 |
| Si11 | $(CH_2)_3$ | $CH_3$ | $(CH_2)_4$ | 1 | 15 | 10 |
| Si12 | $(CH_2)_4$ | $CH_3$ | $(CH_2)_4$ | 1 | 15 | 10 |
| Si13 | -CH=CH- | $CH_3$ | - | 1 | 10 | - |
| Si14 | -CH=CH- | $CH_3$ | - | 1 | 15 | - |

Beispiel 1

In einem 1l-Vierhalskolben mit KPG-Rührer, 40 cm Einstichkolonne, Innenthermometer und Tropftrichter mit aufgesetztem Gaseinleitungsrohr werden 282,47 g (1,70 mol) Isophthalsäure, 80,45 g (0,30 mol) 5-Natriumsulfoisophthalsäure, 213,0 g (2,80 mol) Propandiol-1,2, 127,40 g (1,20 mol) Diethylenglykol sowie 0,82 g (0,010 mol) Natriumacetat wssfr. vorgelegt. Danach wird mit Stickstoff inertisiert und anschließend 0,19 g (0,0007 mol) Titantetraisopropylat zugefügt. Dann wird auf eine Innentemperatur von 175 bis 180 °C erhitzt, wobei innerhalb von 2,5 bis 3 h Wasser abdestilliert (70 g, 97 % d.Th.).

Nach dem Abkühlen auf 80 bis 85 °C werden 300 g (0,20 mol) Si4 gemäß Tabelle 1 zugegeben. Danach wird die Innentemperatur auf 200 bis 210 °C erhöht. Nach Erreichen dieser Temperatur wird innerhalb von 30 min der Druck auf 1 mbar abgesenkt, sowie die Temperatur auf 255 bis 260 °C gesteigert. Bei diesen Reaktionsbedingungen wird 2,5 bis 3 h weiterkondensiert, wobei eine Destillatmenge von 196 g anfällt. Nach Beendigung der Kondensation wird zunächst auf ca. 150 °C abgekühlt und anschließend mit Inertgas belüftet. Nach dem Abkühlen auf Raumtemperatur wird die erstarrte Schmelze zerkleinert und ausgetragen.

Beispiel 2

In einem 1l-Vierhalskolben mit KPG-Rührer, 40 cm Einstichkolonne, Innenthermometer und Tropftrichter mit aufgesetztem Gaseinleitungsrohr werden 388,36 g (2,0 mol) Terephthalsäuredimethylester, 260,7 g (4,20 mol) Ethandiol-1,2, 0,82 g (0,010 mol) Natriumacetat wssfr. vorgelegt. Danach wird mit Stickstoff inertisiert und anschließend 0,19 g (0,0007 mol) Titantetraisopropylat zugefügt. Dann wird auf eine Innentemperatur von 175 bis 180 °C erhitzt, wobei innerhalb von 2,5 bis 3 h Methanol abdestilliert (121 g, 94,5 % d.Th.).

Nach dem Abkühlen auf 80 bis 85 °C werden 324 g (0,24 mol) MPEG 1350, 300 g (0,20 mol) PEG 1500 sowie 361,80 g (0,20 mol) Si2 gemäß Tabelle 1 zugegeben. Danach wird die Innentemperatur auf 200 bis 210 °C erhöht. Nach Erreichen dieser Temperatur wird innerhalb von 30 min der Druck auf 1 mbar abgesenkt, sowie die Temperatur auf 220 bis 235 °C gesteigert. Bei diesen Reaktionsbedingungen wird 2,5 bis 3 h weiterkondensiert, wobei eine Destillatmenge von 220 g anfällt. Nach Beendigung der Kondensation wird zunächst auf ca. 150 °C abgekühlt und anschließend mit Inertgas belüftet. Nach dem Abkühlen auf Raumtemperatur wird die erstarrte Schmelze zerkleinert und ausgetragen.

Beispiel 3

In einem 1l-Vierhalskolben mit KPG-Rührer, 40 cm Einstichkolonne, Innenthermometer und Tropftrichter mit aufgesetztem Gaseinleitungsrohr werden 330,10 g (1,7 mol) Terephthalsäuredimethylester, 88,86 g (0,3 mol) 5-Natriumsulfoisophthalsäuredimethylester, 47,64 g (0,20 mol) 3-Natriumsulfobenzoesäuremethalester, 289,10 g (3,80 mol) Propandiol-1,2, 42,46 g (0,40 mol) Diethylenglykol, 0,82 g (0,010 mol) Natriumacetat wssfr. vorgelegt. Danach wird mit Stickstoff inertisiert und anschließend 0,19 g (0,0007 mol) Titantetraisopropylat zugefügt. Dann wird auf eine Innentemperatur von 175 bis 180 °C erhitzt, wobei innerhalb von 2,5 bis 3 h Methanol abdestilliert (121 g, 94,5 % d.Th.).

Nach dem Abkühlen auf 80 bis 85 °C werden 300 g (0,20 mol) Si4 gemäß Tabelle 1 zugegeben. Danach wird die Innentemperatur auf 200 bis 210 °C erhöht. Nach Erreichen dieser Temperatur wird innerhalb von 30 min der Druck auf 1 mbar abgesenkt, sowie die Temperatur auf 220 bis 235 °C gesteigert. Bei diesen Reaktionsbedingungen wird 2,5 bis 3 h weiterkondensiert, wobei eine Destillatmenge von 220 g anfällt. Nach Beendigung der Kondensation wird zunächst auf ca. 150 °C abgekühlt und anschließend mit Inertgas belüftet. Nach dem Abkühlen auf Raumtemperatur wird die erstarrte Schmelze zerkleinert und ausgetragen.

Analog den Beispielen 1 bis 3 können auch mit den folgenden Ausgangsverbindungen erfindungsgemäße Polykondensate hergestellt werden:

Beispiel 4

0,3 mol 5-Natriumsulfoisophthalsäuredimethylester
1,7 mol Isophthalsäuredimethylester
2,0 mol Ethandiol-1,2
2,0 mol Propandiol-1,2
0,05 mol Verbindung Si1 gemäß Tabelle 1

Beispiel 5

0,2 mol 5-Natriumsulfoisophthalsäuredimethylester
1,7 mol Terephthalsäuredimethylester
1,5 mol Ethandiol-1,2
2,5 mol Propandiol-1,3
0,02 mol Verbindung Si5 gemäß Tabelle 1
0,12 mol Polyethylenglykolmonomethylether 750

Beispiel 6

0,4 mol 5-Natriumsulfoisophthalsäure
1,6 mol Terephthalsäuredimethylester
1,0 mol Ethandiol-1,2
3,0 mol Propandiol-1,3
0,01 mol Verbindung Si8 gemäß Tabelle 1
0,3 mol 3-Natriumsulfobenzoesäure

Beispiel 7

0,2 mol 5-Natriumsulfoisophthalsäuredimethylester
1,8 mol Terephthalsäuredimethylester
2,0 mol Butandiol-1,4
2,0 mol Propandiol-1,3
0,05 mol Verbindung Si3 gemäß Tabelle 1

Beispiel 8

1,0 mol 5-Natriumsulfoisophthalsäure
1,0 mol Isophthalsäure
2,0 mol Ethandiol-1,2
2,0 mol Diethylenglykol
0,1 mol Verbindung Si4 gemäß Tabelle 1

Beispiel 9

0,3 mol 5-Natriumsulfoisophthalsäuredimethylester
1,7 mol Isophthalsäurediethylester
1,0 mol Ethandiol-1,2
3,0 mol 2,2-Dimethylpropandiol
0,02 mol Verbindung Si10 gemäß Tabelle 1

Beispiel 10

2,0 mol Terephthalsäuredimethylester
3,0 mol Propandiol-1,2
1,0 mol Polyethylenglykol 1500
0,15 mol Verbindung Si6 gemäß Tabelle 1
0,1 mol Polyethylenglykolmonomethylether 750

Beispiel 11

0,2 mol 5-Natriumsulfoisophthalsäure
1,8 mol Isophthalsäure
2,0 mol Ethandiol-1,2
2,0 mol 1,4-Bishydroxymethylcyclohexan
0,1 mol Verbindung Si5 gemäß Tabelle 1
0,3 mol 2-Hydroxyethansulfonsäure, Na-Salz

Beispiel 12

2,0 mol Terephthalsäuredimethylester
1,0 mol Polyethylenglykol 1500
3,0 mol Diethylenglykol
0,15 mol Verbindung Si14 gemäß Tabelle 1
0,25 mol 2-Hydroxyethansulfonsäure, Na-Salz

Beispiel 13

1,0 mol Bernsteinsäuredimethylester
1,0 mol Terephthalsäuredimethylester
2,0 mol Polyethylenglykol 750
2,0 mol Propandiol-1,2
0,1 mol Verbindung Si1 gemäß Tabelle 1

**Patentansprüche**

1. Polykondensate der allgemeinen Formel I

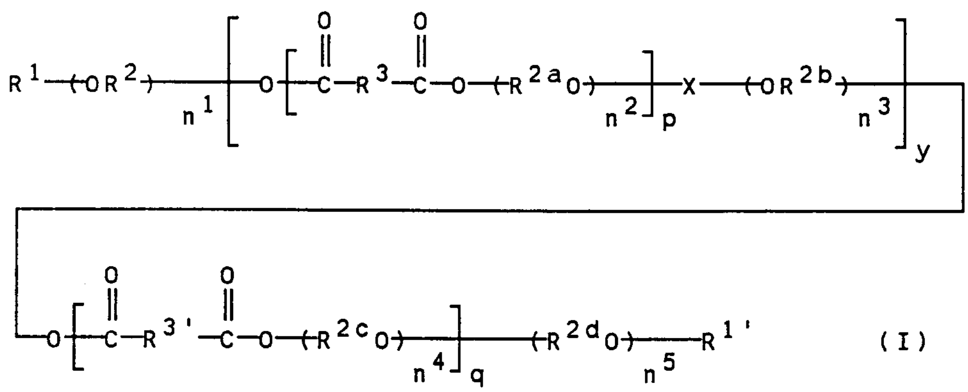

(I)

worin
X

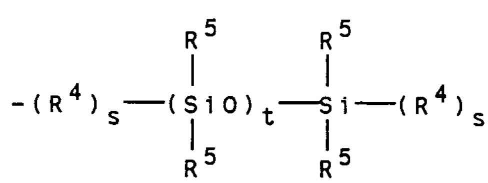

bedeutet;
$R^1$ und $R^{1'}$ unabhängig voneinander Wasserstoff, $(C_1-C_{22})$-Alkyl, $(C_2-C_{22})$-Alkenyl, $(C_3-C_8)$-Cycloalkyl, $(C_6-C_{14})$-Aryl, $(C_6-C_{14})$-Aryl-$(C_1-C_8)$-Alkyl, $MO_3S-R^6$-, $MO_3S$-,

$MO_3S-(R^{2e}O)_{n^6}-R^{2e}-$

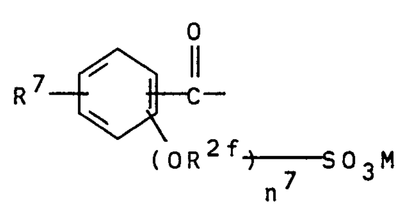

oder

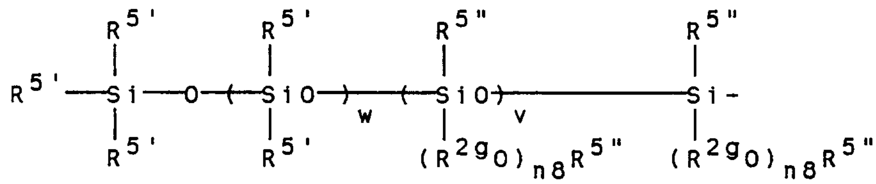

bedeuten;
$R^2$ bis $R^{2g}$ unabhängig voneinander $(C_1\text{-}C_{30})$-Alkylen, $(C_3\text{-}C_8)$-Cycloalkylen und/oder $(C_2\text{-}C_{30})$-Alkenylen, die durch einen Rest $R^1$ substituiert sein können, bedeuten;
$R^3$ und $R^{3'}$ unabhängig voneinander $(C_2\text{-}C_{22})$-Alkylen, $(C_3\text{-}C_8)$-Cycloalkylen, $(C_2\text{-}C_{22})$-Alkenylen und/oder $(C_6\text{-}C_{14})$-Arylen bedeuten, wobei 0 bis 30 % aller Reste $R^3$ und $R^{3'}$ einen $-SO_3M$-Substituenten tragen;
$R^4$ $(C_1\text{-}C_{30})$-Alkylen, $(C_3\text{-}C_8)$-Cycloalkylen oder $(C_2\text{-}C_{30})$-Alkenylen bedeutet;
$R^5$, $R^{5'}$ und $R^{5''}$ unabhängig voneinander Wasserstoff, $(C_1\text{-}C_{30})$-Alkyl, $(C_3\text{-}C_8)$-Cycloalkyl oder $(C_2\text{-}C_{30})$-Alkenyl bedeuten;
$R^6$ wie $R^3$, aber unabhängig von diesem, definiert ist;
$R^7$ $(C_1\text{-}C_{22})$-Alkyl, $(C_3\text{-}C_8)$-Cycloalkyl oder $(C_2\text{-}C_{22})$-Alkenyl bedeutet, wobei 0 bis 30 % aller Reste $R^7$ einen $-SO_3M$-Substituenten tragen;
M Wasserstoff, ein Alkalimetall, die Ammoniumgruppe oder eine substituierte Ammoniumgruppe bedeutet;
$n^1$ bis $n^8$ unabhängig voneinander eine ganze Zahl von 0 bis 40 bedeuten;
p und q unabhängig voneinander eine ganze Zahl von 2 bis 20 bedeuten;
s O oder 1 bedeutet;
t eine ganze Zahl von 0 bis 80 bedeutet;
w eine ganze Zahl von 0 bis 80 bedeutet,
v eine ganze Zahl von 0 bis 80 bedeutet und
y eine ganze Zahl von 1 bis 20 bedeutet.

2. Polykondensate gemäß Anspruch 1, dadurch gekennzeichnet, daß
$R^1$ und $R^{1'}$ unabhängig voneinander Methyl oder Ethyl,
$R^2$ bis $R^{2f}$ unabhängig voneinander Ethylen, n-Propylen oder i-Propylen,
$R^3$ und $R^{3'}$ unabhängig voneinander $(C_1\text{-}C_4)$-Alkylen, Phenylen oder Naphthylen,
$R^4$ $(C_1\text{-}C_4)$-Alkylen,
$R^5$, $R^{5'}$ und $R^{5''}$ unabhängig voneinander Wasserstoff oder $(C_1\text{-}C_5)$-Alkyl,
M Wasserstoff, Natrium oder Kalium,
$n^1$ bis $n^8$ unabhängig voneinander eine ganze Zahl von 2 bis 35,
p und q unabhängig voneinander eine ganze Zahl von 2 bis 20,
t eine ganze Zahl von 0 bis 40,
w eine ganze Zahl von 1 bis 30,
v eine ganze Zahl von 0 bis 4 und
y eine ganze Zahl von 1 bis 5
bedeuten.

3. Polykondensate gemäß Anspruch 1 und/oder 2, dadurch gekennzeichnet, daß alle Werte $n^1$ bis $n^8$ identisch sind oder nur für 2 oder 3 verschiedene ganze Zahlen stehen.

4. Polykondensate gemäß einem oder mehreren der Ansprüche 1 bis 3, dadurch gekennzeichnet, daß alle Reste $R^2$ bis $R^{2g}$ identisch sind oder nur 2 oder 3 verschiedene Bedeutungen haben.

5. Polykondensate gemäß einem oder mehreren der Ansprüche 1 bis 4, dadurch gekennzeichnet, daß die Summe p + q eine ganze Zahl von 5 bis 15 ist.

**6.** Polykondensate gemäß einem oder mehreren der Ansprüche 1 bis 5, dadurch gekennzeichnet, daß die Molekulargewichte von 2000 bis 20000 aufweisen.

**7.** Verfahren zur Herstellung der Polykondensate gemäß einem oder mehreren der Ansprüche 1 bis 6, dadurch gekennzeichnet, daß
a) eine Verbindung der allgemeinen Formel IIa
$R^8OOC\text{-}R^3\text{-}COOR^8$ (IIa)

worin $R^3$ wie in Anspruch 1 angegeben definiert ist und $R^8$ Wasserstoff, $(C_1\text{-}C_4)$-Alkyl, Halogen, wie insbesondere Chlor, oder $R^8OOC\text{-}R^3\text{-}CO\text{-}$ bedeutet, und eine Verbindung der allgemeinen Formel IIb

$R^9OOC\text{-}R^{3'}\text{-}COOR^9$ (IIb)

worin $R^{3'}$ wie in Anspruch 1 angegeben definiert ist und $R^9$ Wasserstoff, $(C_1\text{-}C_4)$-Alkyl, Halogen, wie insbesondere Chlor, oder $R^8OOC\text{-}R^{3'}\text{-}CO\text{-}$ bedeutet, und
b) eine Verbindung der allgemeinen Formel IIIa

$$H-(OR^2)_{n^1}-OH \qquad (IIIa)$$

und/oder eine Verbindung der allgemeinen Formel IIIb

$$H-(OR^{2a})_{n^2}-OH \qquad (IIIb)$$

und/oder eine Verbindung der allgemeinen Formel IIIc

$$H-(OR^{2b})_{n^3}-OH \qquad (IIIc)$$

und/oder eine Verbindung der allgemeinen Formel IIId

$$H-(OR^{2c})_{n^4}-OH \qquad (IIId)$$

und/oder eine Verbindung der allgemeinen Formel IIIe

$$H-(OR^{2d})_{n^5}-OH \qquad (IIIe)$$

worin $R^2$ bis $R^{2d}$ und $n^1$ bis $n^5$ wie in Anspruch 1 angegeben definiert sind, und
c) eine Verbindung der allgemeinen Formel IVa

$R^1\text{-}OH$ (IVa)

worin $R^1$ wie in Anspruch 1 angegeben definiert ist, und eine Verbindung der allgemeinen Formel IVb

$R^{1'}\text{-}OH$ (IVb)

worin $R^{1'}$ wie in Anspruch 1 angegeben definiert ist, und

d) eine Verbindung der allgemeinen Formel V

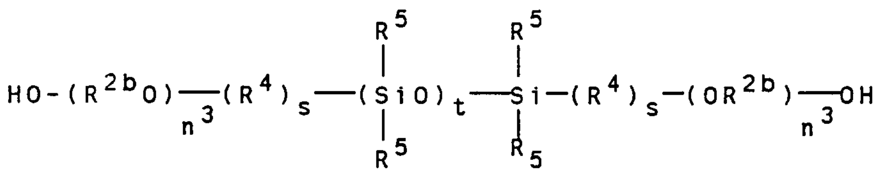

(V)

worin $R^{2b}$, $R^4$, $R^5$, $n^3$, s, und t wie in Anspruch 1 angegebenen definiert sind, miteinander umgesetzt werden.

**8.** Verfahren gemäß Anspruch 7, dadurch gekennzeichnet, daß

a) die Verbindungen der Formeln IIa und IIb in Mengen von zusammen 100 Mol-%,

b) die Verbindungen der Formeln IIa bis IIIe in Mengen von Zusammen 150 bis 250 Mol-%,

c) die Verbindungen der Formeln IVa ind IVb in Mengen von Zusammen 20 bis 40 Mol-% und

d) die Verbindungen der Formel V in Mengen von 10 bis 50 Mol-%

eingesetzt werden.

**9.** Verwendung der Polykondensate gemäß einem oder mehreren der Ansprüche 1 bis 6 zur Textilausrüstung von Polyestergeweben.